# EUROPÄISCHE PATENTSCHRIFT

(11) **EP 1 156 567 B1**
(45) Veröffentlichungstag und Bekanntmachung des Hinweises auf die Patenterteilung: **27.10.2004**
(21) Anmeldenummer: 01110272.0
(22) Anmeldetag: 26.04.2001
(51) Int. Cl.: H02G 3/10

(54) **Geräteeinbaueinheit für Sockelleisten-Installationskanäle**
Apparatus mounting unit for plinth channel
Unité de montage d'appareillage pour canalisation de plinthe

(30) Priorität: 16.05.2000 DE 20008823 U
(43) Veröffentlichungstag der Anmeldung: 21.11.2001
(73) Patentinhaber: Tehalit GmbH & Co. KG, D-67716 Heltersberg (DE)
(72) Erfinder: Eberle, Patrick, 66292 Riegelsberg (DE)
(74) Vertreter: Patentanwälte Möll und Bitterich

(56) Entgegenhaltungen:
- EP-A- 0 159 554
- EP-A- 0 619 634
- DE-A- 4 442 267

## Beschreibung

Die Erfindung betrifft Geräteeinbaueinheiten für Sockelleisten-Installationskanäle gemäß dem Oberbegriff des Anspruchs 1.

Eine derartige Geräteeinbaueinheit ist bekannt aus der EP-A 0 159 554. Sie besteht aus einem Unterteil, das an der Wand befestigbar ist und Vorrichtungen zum Montieren elektrischer Stark- bzw. Schwachstromgeräte besitzt, und einem haubenartigen Oberteil, das auf das Unterteil aufsetzbar ist. Dabei überdeckt die Haube auch den Sockelleisten-Installationskanal im Bereich der Kabelführung. Ein Ausschnitt in ihrer Vorderfront ermöglicht den Zugang zum Installationsgerät. Zur Fixierung der Haube auf dem Unterteil ist in die Vorderfront des Oberteils eine Vertiefung mit einer zentralen Öffnung eingeformt, die mit einer Gewindebohrung am Unterteil fluchtet. Die Verbindung wird mit einer Schraube bewirkt, die aufgrund ihrer Größe und Position den ästhetischen Eindruck der Geräteeinbaueinheit prägt.

Das ästhetische Empfinden der Menschen ist einem stetigen Wandel unterworfen. Heutzutage werden glatte Fronten mit abgerundeten Kanten bevorzugt. Die in der oben genannten Schrift dargestellte Befestigung des haubenartigen Oberteils mit Hilfe einer zentral angeordneten, den ästhetischen Gesamteindruck bestimmenden Befestigungsschraube ist daher nicht mehr zeitgemäß.

Handelsüblich sind von einer französischen Firma hergestellte Geräte mit völlig glatter Vorderfront, bei denen die Befestigungseinrichtungen in die Seitenwände des haubenartigen Oberteils verlegt wurden. Es handelt sich dabei um Befestigungshaken, die mittels einer Schraubendreherklinge aufgehebelt werden. Die Zugänglichkeit zu den Befestigungshaken wird durch in die Seitenwände des haubenartigen Oberteils eingearbeitete, zwar kleinflächige aber trotzdem deutlich sichtbare Manipulationsöffnungen gewährleistet.

Das Aufhebeln der Befestigungshaken mit Hilfe der Schraubendreherklinge ist für einen Fachmann einfach, für einen Laien jedoch weniger einfach durchzuführen. In allen Fällen werden jedoch durch die Hebelbewegung der Schraubendreherklinge die Ränder der Manipulationsöffnungen verdrückt. Das ist unbefriedigend.

Damit die Manipulationsöffnungen in den Seitenwänden des haubenartigen Oberteils zugänglich bleiben, muss zwischen zwei benachbarten Geräteeinbaueinheiten ein erheblicher Abstand eingehalten werden. Auch das ist unbefriedigend.

Der vorliegenden Erfindung liegt daher die Aufgabe zugrunde, eine Geräteeinbaueinheit anzugeben, deren Entriegelungseinrichtung bequem von vorne betätigt werden kann, ohne dass es zu Beschädigungen des haubenartigen Oberteils kommt.

Diese Aufgabe wird durch eine Geräteeinbaueinheit mit den Merkmalen des Anspruchs 1 gelöst.

Die vorliegende Erfindung verwendet zum Lösen der Befestigungseinrichtung einen Schieber, der durch eine kleine Öffnung in der Vorderfront des Oberteils zugänglich ist. Da der Schieber eine rein lineare Bewegung ausführt, muss das Werkzeug, mit dem der Schieber betätigt wird, an den Rändern der Manipulationsöffnung nicht abgestützt werden. Beschädigungen sind daher ausgeschlossen.

Soll bei montiertem Oberteil die Zugangsöffnung unsichtbar bleiben, wird der Entriegelungsschieber so ausgebildet, dass er in seiner Grundposition mit der Vorderfront flächenbündig abschließt und dabei insbesondere die Öffnung vollkommen ausfüllt. Werden Schieber und Oberteil aus demselben Kunststoffmaterial hergestellt, so bleibt - wenn überhaupt - nur der minimale Luftspalt um den Schieber herum sichtbar.

Um die Montage des Oberteils am Unterteil zu erleichtern und um die Befestigungseinrichtungen gegen Beschädigungen zu schützen, ist gemäß einer Weiterbildung der Erfindung im Bereich der Zunge am Unterteil ein Führungstrichter angeformt.

Die Befestigungseinrichtungen können entweder aus zwei Haken oder aus einem Haken und einer Öse bestehen. Im Fall der Haken-Ösen-Lösung empfiehlt es sich, die Öse an der Gleitbahn, den Haken an der Zunge anzuformen.

Zur Vereinfachung des Lösevorgangs empfiehlt es sich, dem an der Zunge angeformten Haken eine Anlaufschräge zu geben, die mit der Form des Entriegelungsschiebers korrespondiert.

Anhand der Zeichnung soll die Erfindung in Form von Ausführungsbeispielen näher erläutert werden. Es zeigen
- Fig. 1: in perspektivischer Ansicht und teilweise aufgebrochen Oberteil und Unterteil einer ersten Geräteeinbaueinheit,
- Fig. 2: die Geräteeinbaueinheit der Fig. 1 als Seitenansicht, ebenfalls teilweise aufgebrochen,
- Fig. 3: den Lösevorgang der montierten Geräteeinbaueinheit nach den Fig. 1 und 2,
- Fig. 4: in perspektivischer Darstellung und teilweise aufgebrochen eine zweite Geräteeinbaueinheit,
- Fig. 5: die Geräteeinbaueinheit der Fig. 4 als Seitenansicht, ebenfalls teilweise aufgebrochen, und
- Fig. 6: den Lösevorgang der montierten Geräteeinbaueinheit nach den Fig. 4 und 5.

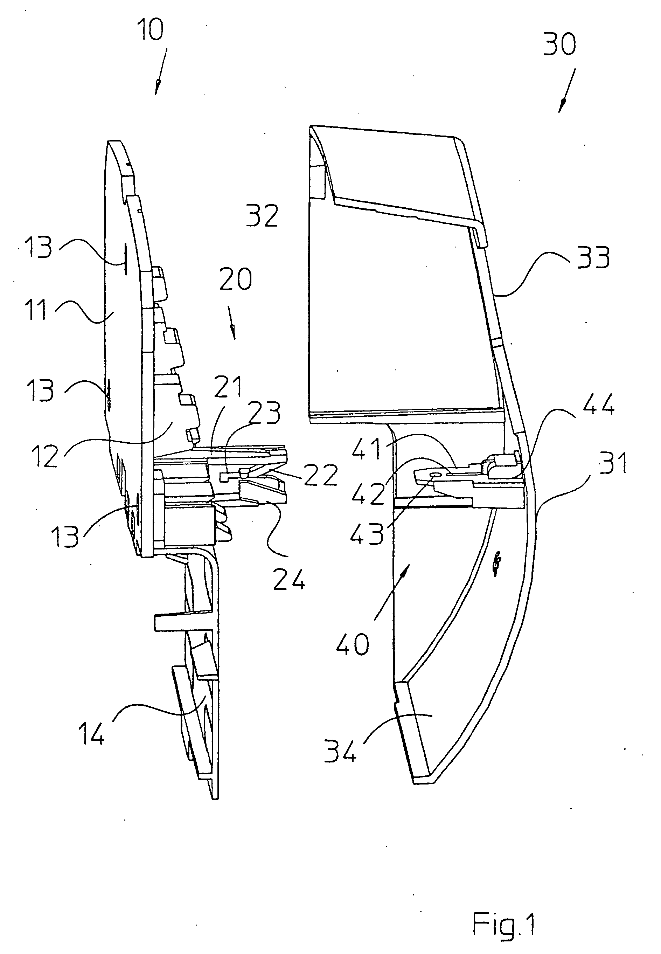

Fig. 1 zeigt in perspektivischer Ansicht eine erste Geräteeinbaueinheit, bestehend aus einem Unterteil 10 und einem dazu passenden haubenartigen Oberteil 30. Das Unterteil 10 besitzt eine Rückwand 11 mit Bohrungen 13 zur Befestigung an einer Wand, Vorrichtungen 12 zum Montieren eines elektrischen Stark- oder Schwachstromgerätes und an seiner Unterseite eine Schürze 14, die einen Leitungsführungskanal (nicht dargestellt) überdeckt und für die elektrische Isolation sorgt.

Das Oberteil 30 besitzt im wesentlichen eine Vorderfront 31, zwei Seitenwände 32, wobei die vordere Seitenwand nicht dargestellt ist, und einen Ausschnitt 33, der den Zugang zu dem auf den Befestigungsvorrichtungen 12 zu montierenden Gerät ermöglicht.

Die Befestigung des Oberteils 30 am Unterteil 10 erfolgt mit Hilfe von kooperierenden Einrichtungen 20, 40, die einerseits am Unterteil 10, andererseits an der Innenseite 34 des Oberteils 30 angeformt sind.

Die am Unterteil 10 angeformte Einrichtung 20 umfasst eine federnde Zunge 21, an deren vorderem Ende ein Keil 22 und ein Haken 23 angeformt sind. Die am Oberteil 30 angeformte Einrichtung 40 umfasst eine Gleitbahn 41, die zur Stabilitätserhöhung mit einem U-förmigen Querschnitt ausgeführt ist. In der Gleitbahn 41 ist ein Gleitschlitz 42 vorgesehen, in dem ein Entriegelungsschlitten 44 geführt ist. Außerdem ist in die Gleitbahn 41 eine Öse 43 eingeformt, in die bei aufgesetztem Oberteil 30 der Haken 23 einrastet.

Ein Führungstrichter 24 unterhalb der Zunge 21 sorgt für einen korrekten Sitz der beiden Einrichtungen 20, 40 zueinander.

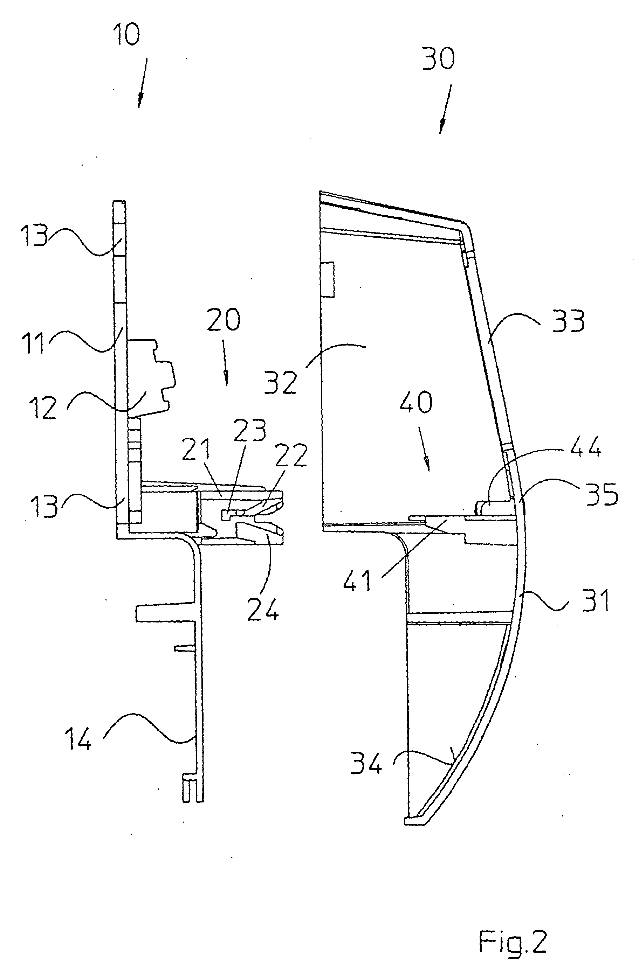

Fig. 2 zeigt dieselbe Gerätekombination als Seitenansicht. Dabei ist der Führungstrichter 24 geschnitten dargestellt, so dass der Keil 22 und der Haken 23 gut zu erkennen sind. Des weiteren wurde der Schnitt im Bereich des Oberteils 30 verändert. Dadurch ist zu erkennen, dass der Entriegelungsschlitten 44 in seiner gezeichneten Grundposition eine Öffnung 35 in der Vorderfront 31 des Oberteils 30 ausfüllt und mit der Vorderfront 31 flächenbündig abschließt. Dadurch ist an der Vorderfront 31 lediglich ein schmaler Luftspalt um den Entriegelungsschlitten 44 herum sichtbar, wobei der Entriegelungsschlitten 44 jedoch sehr gut zugänglich ist.

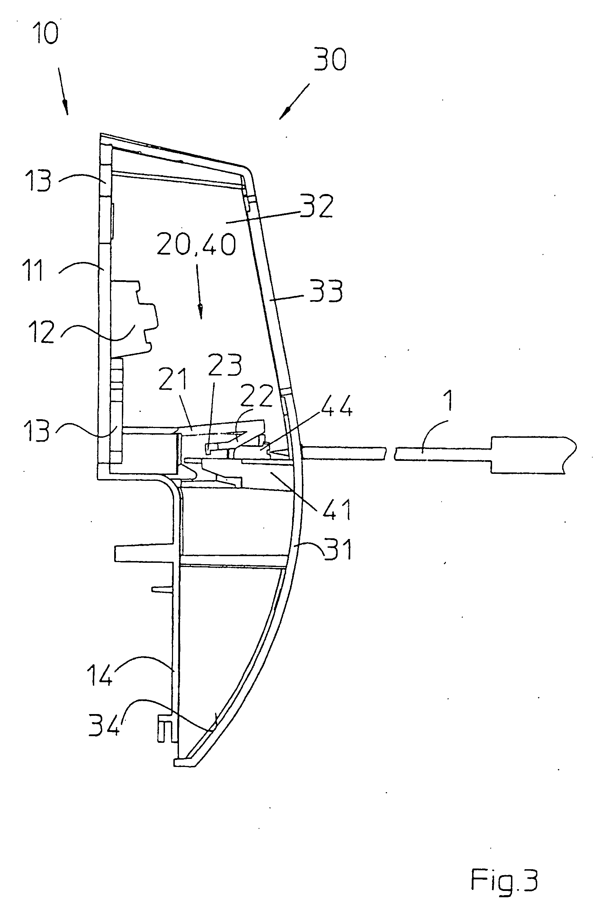

Fig. 3 zeigt die Situation beim Entriegeln der Verbindungseinrichtungen 20, 40. Das Oberteil 30 sitzt noch auf dem Unterteil 10. Mit Hilfe einer Schraubendreherklinge 1 wurde der Entriegelungsschlitten 44 auf der Gleitbahn 41 nach vorne geschoben. Dadurch werden über den Keil 22 die Zunge 21 und der angeformte Haken 23 angehoben, so dass anschließend das Oberteil 30 vom Unterteil 10 abgenommen werden kann.

Beim Wiederaufsetzen des Oberteils 30 wird der Entriegelungsschlitten 44 von der Zunge 21 bzw. dem angeformten Keil 22 automatisch in seine Grundposition zurückgefahren, in der er die Öffnung 35 in der Front 31 des Oberteils 30 flächenbündig ausfüllt.

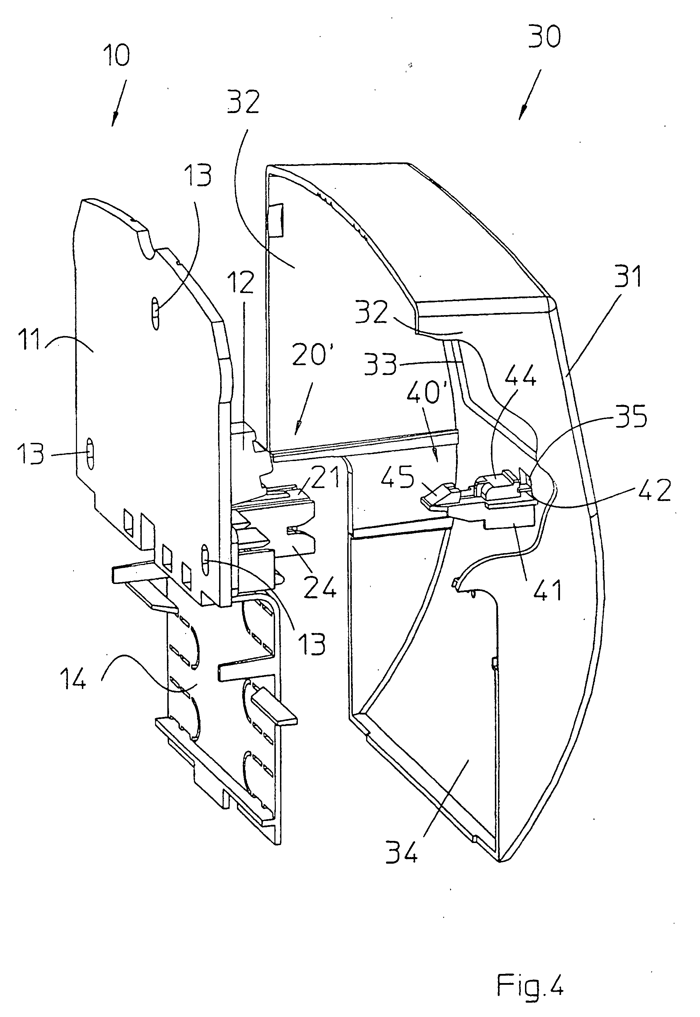

Fig. 4 zeigt in perspektivischer Ansicht eine zweite Geräteeinbaueinheit aus Unterteil 10 und Oberteil 30.

Am Unterteil 10 ist eine Befestigungseinrichtung 20' angeformt, bestehend aus der Zunge 21 mit angeformtem Keil 22, der gleichzeitig einen Haken bildet, und dem Führungstrichter 24.

An der Innenseite 34 des Oberteils 30 ist eine Befestigungseinrichtung 40' vorgesehen, bestehend aus der Gleitbahn 41 mit eingeformtem Gleitschlitz, in dem der Entriegelungsschlitten 44 gleitet. Anstelle der Öse ist ein zweiter Haken 45 vorgesehen, der mit dem ersten Haken 22 kooperiert.

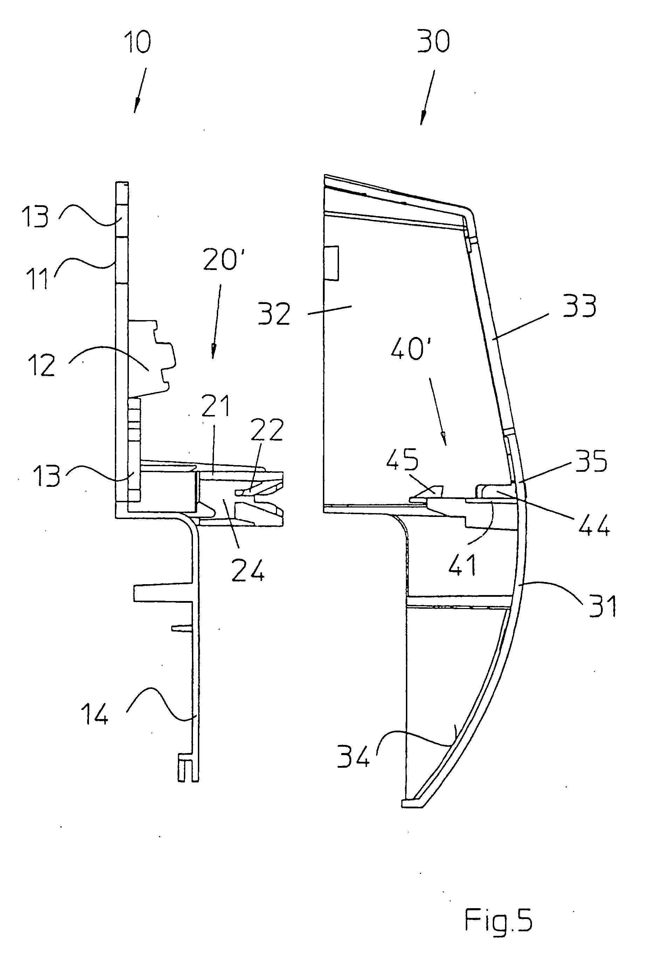

Die Fig. 5 zeigt die Gerätekombination der Fig. 4 in Seitenansicht.

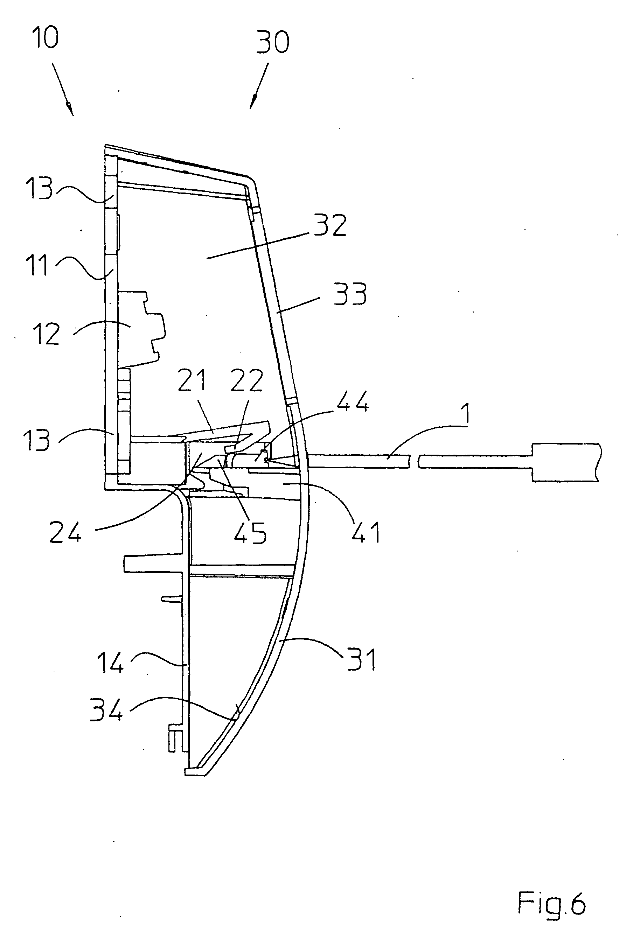

Fig. 6 zeigt die Situation beim Entriegeln der Gerätekombination der Fig. 4 und 5. Mit Hilfe der Schraubendreherklinge 1 wurde der Gleitschlitten 44 nach vorne gefahren, wodurch der erste Haken 22 außer Eingriff mit dem zweiten Haken 45 gebracht wurde, so dass das Oberteil 30 anschließend abgezogen werden kann.

## Patentansprüche

1. Geräteeinbaueinheit für Sockelleisten-Installationskanäle, im wesentlichen umfassend
- ein Unterteil (10), das
- an der Wand befestigbar ist
- und Vorrichtungen (12) zum Montieren elektrischer Stark- bzw. Schwachstromgeräte aufweist,
- ein haubenartiges Oberteil (30), das
- auf das Unterteil (10) aufsetzbar ist
- und in seiner Vorderfront (31) einen Ausschnitt (33) aufweist, der den Zugang zum Gerät ermöglicht,
- und Einrichtungen (20, 40; 20', 40') zur lösbaren Befestigung des Oberteils (30) am Unterteil (10), die von der Vorderfront (31) aus betätigbar sind,
**gekennzeichnet durch** die Merkmale:
- an der Innenseite (34) des Oberteils (30) ist eine Gleitbahn (41) angeformt,
- die Gleitbahn (41) besitzt einen Gleitschlitz (42),
- in dem Gleitschlitz (42) gleitet ein keilförmiger Entriegelungsschlitten (44),
- der Entriegelungsschlitten (44) ist **durch** eine Öffnung (35) in der Vorderfront (31) zu betätigen,
- am Unterteil (10) ist passend zur Gleitbahn (41) eine Zunge (21) angeformt,
- an der Gleitbahn (41) und an der Zunge (21) sind miteinander korrespondierende Rastmittel (22, 23; 43, 45) angeformt,
- die Rastmittel (22, 23; 43, 45)
- verrasten beim Aufsetzen des Oberteils (30) selbsttätig
- und lösen sich beim Einschieben des Entriegelungsschlittens (44) wieder.

2. Geräteeinbaueinheit nach Anspruch 1, **gekennzeichnet durch** das Merkmal:
- der Entriegelungsschlitten (44) schließt in seiner Grundposition mit der Vorderfront (31) flächenbündig ab.

3. Geräteeinbaueinheit nach Anspruch 1 oder 2, **gekennzeichnet durch** das Merkmal:
- der Entriegelungsschlitten (44) füllt in seiner Grundposition die Öffnung (35) in der Vorderfront (31) aus.

4. Geräteeinbaueinheit nach einem der Ansprüche 1 bis 3, **gekennzeichnet durch** das Merkmal:
- im Bereich der Zunge (21) ist am Unterteil (10) ein Führungstrichter (24) angeformt.

5. Geräteeinbaueinheit nach einem der Ansprüche 1 bis 4, **gekennzeichnet durch** die Merkmale:
- an der Zunge (21) ist ein Haken (22, 23) angeformt,
- in die Gleitbahn (41) ist eine damit korrespondierende Öse (43) eingeformt.

6. Geräteeinbaueinheit nach einem der Ansprüche 1 bis 4, **gekennzeichnet durch** die Merkmale:
- an der Zunge (21) ist ein Haken (22) angeformt,
- an der Gleitbahn (41) ist ein damit korrespondierender zweiter Haken (45) angeformt.

7. Geräteeinbaueinheit nach Anspruch 5 oder 6, **gekennzeichnet durch** das Merkmal:
- der an der Zunge (21) angeformte Haken (22) besitzt eine mit dem Entriegelungsschlitten (44) korrespondierende Anlaufschräge.

## Claims

1. Apparatus installation unit for skirting trunking, essentially comprising
- a lower part (10), which
- can be fastened to the wall,
- and comprises appliances (12) for mounting electrical heavy-current or light-current apparatus,
- a hood-like upper part (30), which
- can be fitted on the lower part (10)
- and comprises in its front (31) a cut-out (33) providing access to the apparatus,
- and devices (20, 40; 20', 40') for detachably fastening the upper part (30) to the lower part (10), which devices can be operated from the front (31),
**characterised by** the features:
- a slideway (41) is formed onto the inside (34) of the upper part (30),
- the slideway (41) has a slide slot (42),
- a wedge-shaped unlocking carriage (44) slides in the slide slot (42),
- the unlocking carriage (44) can be operated through an opening (35) in the front (31),
- a tongue (21) is formed onto the lower part (10) so as to match the slideway (41),
- locking means (22, 23; 43, 45), which correspond to one another, are formed onto the slideway (41) and onto the tongue (21),
- the locking means (22, 23; 43, 45)
- automatically interlock when the upper part (30) is fitted
- and disengage again when the unlocking carriage (44) is inserted.

2. Apparatus installation unit according to Claim 1,
**characterised by** the feature:
- the unlocking carriage (44) is flush with the front (31) in its normal position.

3. Apparatus installation unit according to Claim 1 or 2,
**characterised by** the feature:
- the unlocking carriage (44) fills the opening (35) in the front (31) in its normal position.

4. Apparatus installation unit according to any one of Claims 1 to 3, **characterised by** the feature:
- a guide funnel (24) is formed onto the lower part (10) in the region of the tongue (21).

5. Apparatus installation unit according to any one of Claims 1 to 4, **characterised by** the features:
- a hook (22, 23) is formed onto the tongue (21),
- an eye (43), which corresponds to the hook, is formed into the slideway (41).

6. Apparatus installation unit according to any one of Claims 1 to 4, **characterised by** the features:
- a hook (22) is formed onto the tongue (21),
- a second hook (45), which corresponds to the hook (22), is formed onto the slideway (41).

7. Apparatus installation unit according to Claim 5 or 6,
**characterised by** the feature:
- the hook (22) which is formed onto the tongue (21) has a run-up slope which corresponds to the unlocking carriage (44).

## Revendications

1. Unité de montage d'appareillage pour des goulottes d' installation dans une plinthe sensiblement constitué de :
- une pièce de base (10) qui est
- fixable au mur
- et qui présente des dispositifs (12) pour monter des appareils électriques à courant fort ou faible,
- une pièce supérieure (30) de type couvercle qui est
- applicable sur la pièce de base (10)
- et qui présente sur sa face avant (31) une découpe ( 33) permettant l'accès à l'appareillage,
- et des équipements (20, 40 ; 20' , 40') actionnable depuis la face avant (31) afin de réaliser une fixation amovible de la pièce supérieure (30) sur la pièce de base (10),
**caractérisée par** les faits suivants :
- sur la face interne (34) de la pièce supérieure (30) est moulée une glissière (41),
- la glissière (41) possède une rainure (42) de glissement,
- dans la rainure (42) de glissement coulisse un coulisseau (44) de déverrouillage en forme de cône,
- le coulisseau (11) de déverrouillage peut être actionné par une ouverture (35) dans la face avant (31),
- sur la pièce de base (10) est moulée une languette (21) adaptée à la glissière (41),
- sur la glissière (41) et sur la languette (21) sont moulés des moyens d' enclenchement ( 22, 23 ; 43, 45) coïncidant les uns avec les autres,
- les moyens d' enclenchement ( 22, 23 ; 43, 45)
- s'enclenchent de manière autonome lors de la mise en place de la pièce supérieure (30)
- et se détachent à nouveau lors de l'introduction du coulisseau (44) de déverrouillage.

2. Unité de montage d'appareillage selon la revendication 1, **caractérisée en ce que** :
- le coulisseau (44) de déverrouillage, dans sa position de base, se termine à fleur avec la surface de la face avant (31).

3. Unité de montage d'appareillage selon la revendication 1 ou 2, **caractérisée en ce que** :
- le coulisseau (44) de déverrouillage remplit, dans sa position de base, l'ouverture ( 35) dans la face avant (31).

4. Unité de montage d'appareillage selon l'une des revendications 1 à 3, **caractérisé en ce que** :
- au niveau de la languette (21), un cône de guidage (24) est moulé sur la pièce de base (10).

5. Unité de montage d'appareillage selon l'une des revendications 1 à 4, **caractérisée en ce que** :
- un crochet ( 22, 23) est moulé sur la languette (21),
- un oeillet ( 43) correspondant à ce dernier est moulé sur la glissière (41).

6. Unité de montage d'appareillage selon l'une des revendications 1 à 4 **caractérisée en ce que** :
- sur la languette ( 21) est moulé un crochet ( 22) ,
- un second crochet (45) correspondant à ce dernier est moulé sur la glissière (41).

7. Unité de montage d'appareillage selon la revendication 5 ou 6 **caractérisée en ce que** :
- le crochet (22) moulé sur la languette (21) possède une inclinaison d'introduction correspondant au coulisseau (44) de déverrouillage.
